# EUROPÄISCHE PATENTSCHRIFT

(11) **EP 1 937 529 B1**
(45) Veröffentlichungstag und Bekanntmachung des Hinweises auf die Patenterteilung: **20.05.2009**
(21) Anmeldenummer: 06778414.0
(22) Anmeldetag: 01.09.2006
(51) Int. Cl.: B60T 15/02, B60T 8/36, B60C 23/00, B60T 8/172

(54) **VERFAHREN ZUR BESTIMMUNG DES RADDRUCKS IN EINEM ELEKTRONISCH ANSTEUERBAREN KRAFTFAHRZEUGBREMSENREGELUNGSSYSTEM**
METHOD FOR DETERMINING THE WHEEL PRESSURE IN AN ELECTRONICALLY ACTUABLE MOTOR VEHICLE BRAKE CONTROL SYSTEM
PROCEDE POUR DETERMINER LA PRESSION AUX ROUES DANS UN SYSTEME DE REGULATION DE FREINAGE DE VEHICULE AUTOMOBILE A COMMANDE ELECTRONIQUE

(30) Priorität: 12.10.2005 DE 102005049300
(43) Veröffentlichungstag der Anmeldung: 02.07.2008
(73) Patentinhaber: Continental Teves AG & Co. oHG, 60488 Frankfurt (DE)
(72) Erfinder: LOOS, Mirco, 66583 Elversberg (DE)
(74) Vertreter: Brand, Markus
(86) Internationale Anmeldenummer: PCT/EP2006/065900
(87) Internationale Veröffentlichungsnummer: WO 2007/042349

(56) Entgegenhaltungen:
- WO-A-20/04101339
- WO-A-20/05054028
- DE-A1- 10 221 456
- GB-A- 2 367 962

## Beschreibung

Die Erfindung betrifft ein Verfahren gemäß Anspruch 1.

Elektronische Bremsenregelungssysteme für ABS/ESP werden vielfach in heute aktuellen Kraftfahrzeugen eingesetzt. Die Qualität der Regelung des Bremsdrucks in einem Aktuator der Radbremse hängt unter anderem maßgeblich von der Kenntnis des aktuellen Raddrucks des zum Druckaufbau verwendeten Fluids ab. Daher werden neben Sensoren, die den Vordruck bestimmen, zusätzlich Drucksensoren in jedem Radkreis vorgesehen. Die Qualität der Raddruckregelung lässt sich außerdem weiter verbessern, wenn die Einlassventile nicht lediglich schalten (Digitalventile) sondern auch analog bzw. analogisiert betrieben werden (A/D-Ventile). Mindestanforderung für eine entsprechende A/D-Ansteuerung ist eine pulsweitenmodulierte Stromregelung, welche einen entsprechenden Stromtreiber in der Elektronik des Bremsensteuergerätes voraussetzt. Aus Gründen der Fertigungskosten wird zunehmend dazu übergegangen, die Druckinformation der in den Radkreisen vorhandenen Drucksensoren durch über Druckmodelle gebildete Ersatzgrößen zu ersetzen. Auf diese Weise ist es möglich, eine hohe Qualität der Radregelung bereitzustellen und gleichzeitig die zusätzlichen Kosten von mehreren Drucksensoren einzusparen.

Wie gesagt, ist es bekannt, die Berechnung des im Aktuator für das Rad herrschenden Drucks (Raddruck) über ein sogenanntes Radmodell zu ermitteln. Dies kann, wie aus der WO 2004/101339 A1 hervorgeht, in herkömmlichen Bremsenregelungssystemen bei Einlassventilen recht zuverlässig durch eine Bilanzierung der Druckaufbau und Druckabbau-Zeiten auf Grundlage eines selbstlernenden Algorithmus erfolgen, welcher die aktuellen Radregelungsvorgänge beobachtet. Im Falle von komfortableren Bremssystemen mit A/D-Einlassventilen ergeben sich dabei jedoch in einigen Fällen gröbere Abweichungen zwischen dem durch das Modell bestimmten Druck und dem tatsächlichen Raddruck.

Aufgabe der vorliegenden Erfindung ist es, ein solches Bremsystem ohne Raddrucksensoren noch weiter zu verbessern, so dass die Qualität der Bremsenregelung insbesondere im ABS-Betrieb weiter verbessert wird, wodurch sich grundsätzlich eine Verkürzung des Bremsweges ergibt.

Diese Aufgabe wird erfindungsgemäß gelöst durch das Verfahren gemäß Anspruch 1.

Damit das Verfahren gemäß der Erfindung durchge-führt werden kann, ist es erforderlich, zunächst eine möglichst genaue Kenntnis der Öffnungsstromkennlinie des Auslassventils zu Verfügung zu haben. Hierzu wird vorzugsweise ein Kalibrierverfahren durchgeführt, bei dem der Ventilansteuerstrom variiert wird und der Strom, bei dem das Ventil öffnet bzw. schließt, durch eine Anomalie des Stroms durch die bzw. der Spannung über der Ventilspule oder einer im Bereich des Spulenmagnetkreises angeordneten Messspule, bestimmt wird. Entsprechende Verfahren zur Bestimmung des Ventilöffnungsstrom sind im Zusammenhang mit Einlassventilen an sich bekannt. So beschreibt beispielsweise die WO 2005/090815 A2 ein Verfahren zum Ermitteln einer Öffnungsstromkennlinie in einem Kraftfahrzeugbremsensteuergerät, mit dem eine Ermittlung der Kalibrierwerte für die Öffnüngsstromkennlinie drucklos durchgeführt werden kann. Die gemäß der Erfindung einsetzbaren zuvor beschriebenen Kalibrierverfahren zum Ermitteln einer Öffnungsstromkurve lassen sich im Werk und/oder am Band und/oder im Betrieb eines Kraftfahrzeuges durchführen, wobei wie schon in der WO 2005/090815 A2 vorgeschlagen wurde - die alleinige oder zumindest überwiegende Ausführung des zuletzt erwähnten Verfahrens besonders zweckmäßig ist, da dies zu einem merklichen Einsparungseffekt bei der Herstellung führt.

Zur Verifikation des Raddrucks wird dann das Auslassventil eines Bremskreises durch entsprechende elektrische Ansteuerung des Ventils kurzzeitig geöffnet. Die Öffnungsstromkennlinie liefert den Zusammenhang zwischen Strom und Druck, bei dem der eingestellte Strom (Magnetkraft in der Spule) im Gleichgewicht mit der aufgebrachten hydraulische Kraft ist. Das bedeutet, dass dann die magnetische Kraft, welche durch die stromdurchflossenen Spule bewirkt wird, genauso groß ist, wie die hydraulische Kraft, welche auf den Dichtdurchmesser des geschlossenen Ventils einwirkt. Die Öffnungsstromkennlinie liefert also den Zusammenhang zwischen Differenzdruck am Ventil und die durch einen Strom aufgebrachten Magnetkraft. Der dabei fließende Strom, welcher vorgegeben oder gemessen wird, gibt Aufschluss darüber, bei welchem Strom das Ventil gerade geöffnet hat (Öffnungsstrom). Bei bekannter Öffnungsstromkennlinie ist also bei gemessenem Öffnungsstrom ein Rückschluss auf die am Ventil anliegende Druckdifferenz möglich. Am Auslassventil entspricht in der Regel die anliegende Druckdifferenz gleichzeitig dem aktuell vorliegenden Raddruck. Hierbei wird davon ausgegangen, dass hinter dem Auslassventil im Prinzip kein nennenswerter Druck anliegt. Hinter dem Auslassventil befindet sich bei einem herkömmlichen Bremssystem beispielsweise der Niederdruckspeicher, welcher Maximal einen Druck im Bereich von 3 bar aufnehmen kann. Somit ist durch die Erfindung zumindest innerhalb einer gewissen Toleranz eine Raddruckbestimmung möglich.

Während einer Raddruckregelung kann dann bevorzugt ein Vergleich des auf diese Weise über den Öffnungsstrom bestimmten Drucks mit dem gemäß einem an sich bekannten Druckmodell bestimmten Druck durchgeführt werden. Dieser Raddrucktest lässt sich prinzipiell bei jedem Druckaufbauzyklus einer elektronisch gesteuerten Radregelung durchführen. Es ist jedoch zweckmäßig, um den Druckmittelverlust bei dem Raddrucktest gering zu halten, diesen Test nur hin und wieder, also nicht bei jedem Druckaufbaupuls durchzuführen. Der Zeitpunkt eines solchen Raddrucktests kann insbesondere von Kriterien abhängig gemacht werden, welche auf eine Druckabweichung hindeuten. Alternativ ist es insbesondere möglich, dass der Raddrucktest regelmäßig, z.B. nach einer vorgegebenen Anzahl von Pulsen, durchgeführt wird.

Die Elektronik des erfindungsgemäßen Kraftfahrzeugbremssystems weist bevorzugt zusätzlich im Bereich der Stromansteuerung der Auslassventile Stromtreiberstufen auf, die eine Steuerung des Ventilsstroms erlauben. Hierzu sind die entsprechenden elektrischen Ventilanschlüsse der Auslassventile insbesondere mit einer Einrichtung zur Pulsweitenmodulation verbunden.

Weitere bevorzugte Ausführungsformen ergeben sich aus den Unteransprüchen. Nachfolgend wird das Verfahren gemäß der Erfindung an Hand einer Figur beispielhaft näher beschrieben.

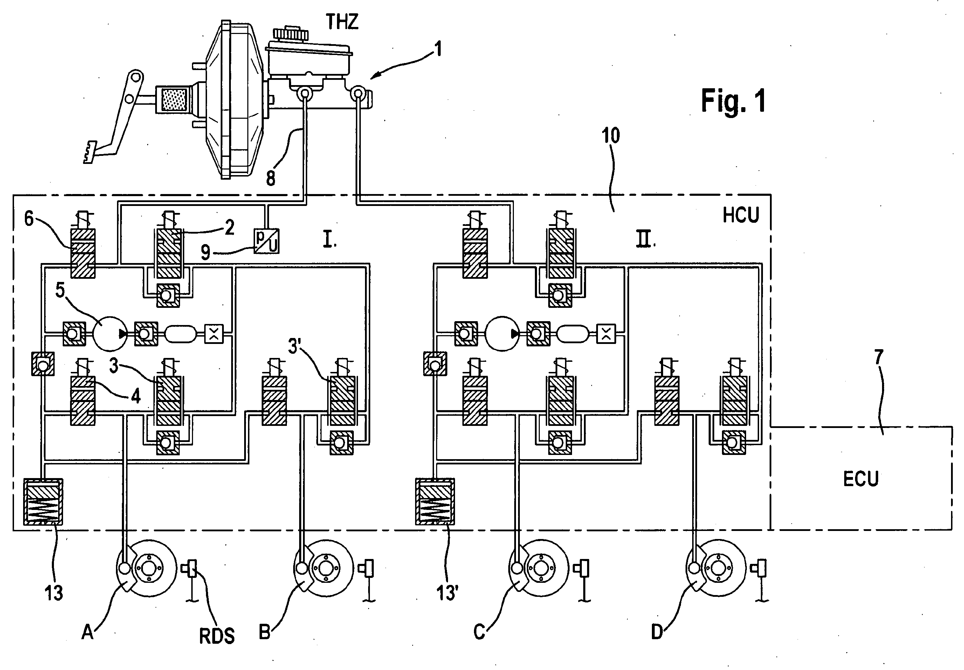

Es zeigt
- Fig. 1: eine schematische Darstellung einer Bremsvorrich- tung mit analog ansteuerbaren Ventilen.

In Fig. 1 ist Tandemhauptzylinder (THZ) 1 mit Ventilblock 10 eines elektronischen Kraftfahrzeugbremssystems verbunden. Elektronikeinheit 7 umfasst ein Mikrocontrollersystem, mit dem die im Ventilblock enthaltenen Aktuatoren und Sensoren elektronisch gesteuert bzw. ausgemessen werden. Ventilblock 4 umfasst zwei Bremskreise I und II. Ferner umfasst jeder Bremskreis zwei Raddruckkreise (A, B bzw. C, D) mit jeweils einem analog ansteuerbaren Einlass- 3 und einem Auslassventil 4, welches durch ECU 7 ebenfalls über eine PWM-Stromregelung ansteuerbar ist. 2 bezeichnet ein stromlos offenes Trennventil und 6 ein stromlos geschlossenes elektronisches Umschaltventil. Nach dem Auslassventil und vor Pumpe 5 befindet sich außerdem ein Niederdruckspeicher 13 bzw. 13' im zweiten Bremskreis II. In der zu Hauptzylinder 1 führenden Hydraulikleitung 8 befindet sich ein Eingangsdrucksensor 9. In den Raddruckkreisen selbst befinden sich keine weiteren Drucksensoren. Pumpe 5 wird zum selbstständigen Druckaufbau verwendet, zum Beispiel im ASR- oder ESP-Fall.

Auslassventil 4 ist ein stromlos geschlossenes SG-Ventil (Digitalventil), welches durch einen Treiber innerhalb der Elektronik der ECU 7 so angesteuert wird, dass der Strom ermittelbar ist, bei dem das Auslassventil schaltet. Im Gegensatz zu einem Analogventil ist wegen des abrupten Ankerumklappens der Schaltzeitpunkt bei einem stromlos geschlossenen SG-Ventil relativ scharf erkennbar. Durch Messung bei verschiedenen Vordrücken während nichtgeregelter Bremsvorgänge und Bestimmung des Vordrucks über Drucksensor 9 kann eine Öffnungsstromkennlinie für Ventil 4 ermittelt werden.

Auf Grundlage der nach diesem Verfahren ermittelten Öffnungsstromkennlinie kann dann über das Öffnungsverhalten des Auslassventils 4 während einer ABS-Regelung der Druck in den Radzylindern bestimmt werden. Hierzu wird Auslassventil 4 mit einer Stromrampe angesteuert. Die Reaktion des Stößels wird detektiert und der aktuelle Strom gespeichert. Anschließend wird Ventil 4 sofort wieder geschlossen, um den Verlust an Hydraulikmittel innerhalb der Radbremse möglichst gering zu halten. Aus diesem Strom kann mittels der bekannten Öffnungsstromkennlinie auf den Raddruck geschlossen werden.

## Patentansprüche

1. Verfahren, bei dem eine Bestimmung des Raddrucks in einem elektronisch gesteuerten Kraftfahrzeugbremssystem durchgeführt wird, wobei das Bremssystem in den Radkreisen Einlass- (3) sowie Auslassventile (4) aufweist und welche dazu bestimmt sind, den Druck in den Aktuatoren (A ... D) der Radbremsen zu regeln, wobei zumindest eines der Ventile insbesondere alle Ventile im Bereich des Aktuators über eine oder mehrere Treiberstufe/n angesteuert wird/werden, welche eine Einstellung des Ventilstroms erlaubt/erlauben, **dadurch gekennzeichnet, dass** am Band und/oder im Werk und/oder im Fahrzeug zumindest ein einziges Mal ein elektronisch gesteuertes Kalibrierverfahren des Auslassventils (4) durchführt wird, mit dem eines oder mehrere Auslassventile hinsichtlich ihres Öffnungsstromverhaltens kalibriert werden, und während eines Raddruckregelungsvorgangs zur Verifikation des Raddrucks das Auslassventil eines Bremskreises durch entsprechend elektrische Ansteuerung des Ventils kurzzeitig geöffnet wird, dabei der Strom gemessen wird, welcher dann fließt, wenn das Ventil gerade geöffnet hat (Öffnungsstrom) und der gemessene Strom als Maßgabe zur Bestimmung des Raddrucks unter Berücksichtung der nach dem Kalibrierverfahren ermittelten Kalibrierwerte für das entsprechende Auslassventil herangezogen wird.

2. Verfahren nach Anspruch 1, **dadurch gekennzeichnet, dass** bei dem Kalibrierverfahren der Ventilansteuerstrom variiert wird und der Strom, bei dem das Ventil öffnet bzw. schließt, durch eine Anomalie des Stroms bzw. der Spannung über der Ventilspule oder einer im Bereich des Spulenmagnetkreises angeordneten Messspule bestimmt wird.

3. Verfahren nach Anspruch 1 oder 2, **dadurch gekennzeichnet, dass** ein Vergleich zwischen dem über den Strom bestimmten Druck und dem gemäß einem an sich bekannten Druckmodell bestimmten Druck zur Verbesserung der Radregelung durchgeführt wird.

4. Verfahren nach mindestens einem der vorhergehenden Ansprüche, **dadurch gekennzeichnet, dass** zum Öffnen des Auslassventils der Strom über eine Rampe erhöht wird und bei einer Anomalie des Stroms bzw. der Spannung über der Ventilspule oder einer im Bereich des Spulenmagnetkreises angeordneten Messspule, welche auf eine Anker/Stößelbewegung hindeutet, der aktuelle Strom bestimmt wird und danach das Ventil durch schnelles Erniedrigen des Stroms wieder geschlossen wird.

5. Verfahren nach mindestens einem der vorhergehenden Ansprüche, **dadurch gekennzeichnet, dass** der durch das Verfahren ermittelte Druckwert Komfortfunktionen, wie insbesondere ACC oder Tempomat zur Verfügung gestellt wird.

6. Verfahren nach mindestens einem der vorhergehenden Ansprüche, **dadurch gekennzeichnet, dass** das Bremssystem höchstens einen Drucksensor pro Bremskreis zur Bestimmung des Vordrucks eines Druckmittelfluids aufweist.

7. Verfahren nach mindestens einem der vorhergehenden Ansprüche, **dadurch gekennzeichnet, dass** sowohl die Einlassventile als auch die Auslassventile mit einer Treiberstufe verbunden sind, die eine individuelle Stromeinstellung ermöglicht.

8. Verfahren nach mindestens einem der vorhergehenden Ansprüche, **dadurch gekennzeichnet, dass** das Kalibrierverfahren während der Fahrt und während nicht geregelter Bremsvorgänge durchgeführt wird.

9. Verfahren nach mindestens einem der vorhergehenden Ansprüche, **dadurch gekennzeichnet, dass** die Verifikation vor oder im Anschluss an eine Druckaufbaupulsfolge durchgeführt wird.

## Claims

1. Method in which the wheel pressure in an electronically controlled motor vehicle brake system is determined, wherein the brake system has inlet valves (3) and outlet valves (4) in the wheel circuits, which are intended to regulate the pressure in the actuators in the wheel brakes (A ... D), wherein at least one of the valves, in particular all the valves in the region of the actuator are actuated by means of one or more driver stages which permit the valve current to be set, **characterized in that** an electronically controlled calibration method of the outlet valve (4), with which one or more outlet valves are calibrated in terms of their opening flow behaviour, is carried out at least a single time on the production line and/or at the works and/or in the vehicle, and, during a wheel pressure regulating process for verifying the wheel pressure, the outlet valve of a brake circuit is opened briefly by corresponding electrical actuation of the valve, in which the current is measured and which then flows when the valve is just opened (opening current) and the measured current is used as a measure for determining the wheel pressure by taking into account calibration values, determined according to the calibration method, for the corresponding outlet valve.

2. Method according to Claim 1, **characterized in that**, during the calibration method, the valve actuation current is varied and the current at which the valve opens or closes is determined by means of an anomaly of the current or of the voltage across the valve coil or a measuring coil which is arranged in the region of the coil magnetic circuit.

3. Method according to Claim 1 or 2, **characterized in that** a comparison is carried out between the pressure which is determined by means of the current and the pressure for improving the regulation of the wheel which is determined in accordance with a pressure model which is known per se.

4. Method according to at least one of the preceding claims, **characterized in that**, in order to open the outlet valve, the current is increased over a ramp and when there is an anomaly in the current or in the voltage across the valve coil or a measuring coil which is arranged in the region of the coil magnetic circuit which indicates movement of an armature/plunger, the particular current is determined and the valve is then closed again by quickly reducing the current.

5. Method according to at least one of the preceding claims, **characterized in that** the pressure value which is determined by means of the method makes available comfort functions such as, in particular, ACC or cruise control.

6. Method according to at least one of the preceding claims, **characterized in that** the brake system has not more than one pressure sensor per brake circuit for determining the admission pressure of a pressure fluid.

7. Method according to at least one of the preceding claims, **characterized in that** both the inlet valves and the outlet valves are connected to a driver stage which permits individual setting of the current.

8. Method according to at least one of the preceding claims, **characterized in that** the calibration method is carried out during travel and while the braking processes are not being regulated.

9. Method according to at least one of the preceding claims, **characterized in that** the verification is carried out before or subsequent to a pressure build-up pulse sequence.

## Revendications

1. Procédé dans lequel une détermination de pression aux roues est réalisée dans un système de freinage de véhicule automobile à commande électronique, le système de freinage comportant des soupapes d'admission (3) ainsi que des soupapes d'évacuation (4) dans les circuits de roue qui sont destinées à régler la pression dans les actionneurs (A ... D) des freins de roue, au moins une des soupapes, notamment toutes les soupapes situées dans la zone de l'actionneur, étant commandées par l'intermédiaire d'un ou de plusieurs étages d'excitation permettant de régler le courant de la soupape, **caractérisé en ce qu'**un procédé d'étalonnage à commande électronique de la soupape d'évacuation (4) est réalisé au moins une fois au niveau de la chaîne de fabrication et/ou à l'atelier et/ou dans le véhicule, ledit procédé permettant d'étalonner une ou plusieurs soupapes d'évacuation par rapport à leur comportement de courant d'ouverture et la soupape d'évacuation d'un circuit de frein étant ouverte pendant une période courte pendant un processus de réglage de la pression aux roues pour vérifier la pression aux roues par commande électrique correspondante de la soupape, afin de mesurer le courant circulant lorsque la soupape vient de s'ouvrir (courant à l'ouverture) et d'utiliser le courant mesuré servant de valeur pour déterminer la pression aux roues pour la soupape d'évacuation correspondante en tenant compte des valeurs d'étalonnage déterminées selon le procédé d'étalonnage.

2. Procédé selon la revendication 1, **caractérisé en ce qu'**on fait varier le courant de commande de soupape pendant le procédé d'étalonnage et que le courant auquel la soupape s'ouvre et/ou se ferme est déterminé au moyen d'une anomalie du courant et/ou de la tension à travers la bobine de soupape ou une bobine de mesure disposée dans la zone du circuit de l'aimant de bobine.

3. Procédé selon la revendication 1 ou 2, **caractérisé en ce qu'**une comparaison entre la pression déterminée via le courant et la pression déterminée selon un modèle de pression connu en soi est réalisée pour améliorer le réglage de la roue.

4. Procédé selon au moins l'une quelconque des revendications précédentes, **caractérisé en ce que** pour ouvrir la soupape d'évacuation, le courant est augmenté via une rampe et qu'en cas d'anomalie du courant et/ou de la tension, le courant réel est déterminé à travers la bobine de soupape ou une bobine de mesure disposée dans la zone du circuit de l'aimant de bobine, ladite anomalie signalant un mouvement d'ancrage / du piston, puis la soupape est de nouveau fermée par réduction rapide du courant.

5. Procédé selon au moins l'une quelconque des revendications précédentes, **caractérisé en ce que** des fonctions de confort sont mises à disposition, telles que notamment ACC ou Tempomat, par le biais de la valeur de pression déterminée à l'aide du procédé.

6. Procédé selon au moins l'une quelconque des revendications précédentes, **caractérisé en ce que** le système de freinage comporte au maximum un capteur de pression par circuit de frein pour déterminer la pression préalable d'un fluide servant d'agent de pression.

7. Procédé selon au moins l'une quelconque des revendications précédentes, **caractérisé en ce que** tant les soupapes d'admission que les soupapes d'évacuation sont reliées à un étage d'excitation permettant un réglage individuel du courant.

8. Procédé selon au moins l'une quelconque des revendications précédentes, **caractérisé en ce que** le procédé d'étalonnage est réalisé en conduite et pendant des processus de freinage non réglés.

9. Procédé selon au moins l'une quelconque des revendications précédentes, **caractérisé en ce que** la vérification est réalisée avant une succession d'impulsions de mise sous pression ou en correspondance avec elles.
